# EUROPEAN PATENT SPECIFICATION

(11) **EP 3 591 279 B1**
(45) Date of publication and mention of the grant of the patent: **27.07.2022**
(21) Application number: 18788153.7
(22) Date of filing: 20.04.2018
(51) Int. Cl.: F16M 11/12

(54) **CAMERA PAN-TILT AND CAMERA SYSTEM**
KAMERASCHWENKUNG/-NEIGUNG UND KAMERASYSTEM
PANORAMIQUE-INCLINAISON DE CAMÉRA ET SYSTÈME DE CAMÉRA

(30) Priority: 20.04.2017 CN 201710262761
(43) Date of publication of application: 08.01.2020
(73) Proprietor: Huawei Technologies Co., Ltd., Longgang District Shenzhen, Guangdong 518129 (CN)
(72) Inventor: YANG, Jingfeng, Shenzhen Guangdong 518129 (CN); ZHANG, Yehua, Shenzhen Guangdong 518129 (CN); LIU, Yimin, Shenzhen Guangdong 518129 (CN); GUI, Guozhu, Shenzhen Guangdong 518129 (CN)
(74) Representative: Maiwald Patent- und Rechtsanwaltsgesellschaft mbH
(86) International application number: PCT/CN2018/083824
(87) International publication number: WO 2018/192558

(56) References cited:
- CN-A- 105 027 554
- CN-A- 106 555 921
- CN-U- 203 927 315
- CN-U- 205 336 398
- CN-U- 205 560 173
- CN-Y- 2 396 414
- CN-Y- 2 676 540
- US-A1- 2005 018 074
- US-A1- 2014 219 647

## Description

### TECHNICAL FIELD

This application relates to the field of communications technologies, and in particular, to a camera pan-tilt-zoom control and a camera system.

### BACKGROUND

A video conference is a conference in which people at two or more different locations talk face to face by using a terminal device and a network, and is provided as a high-tech communication means for people that cannot gather to a same location.

CN 203 927 315 U5 describes a diaphragm split installed type displacement actuator.

US 2005/018074 A1 describes active camera apparatus and a robot apparatus in which the camera and the camera actuator can be protected from the external environment.

CN 105 027 554 A and CN 2 676 540 Y2 disclose mechanotronics for cameras.

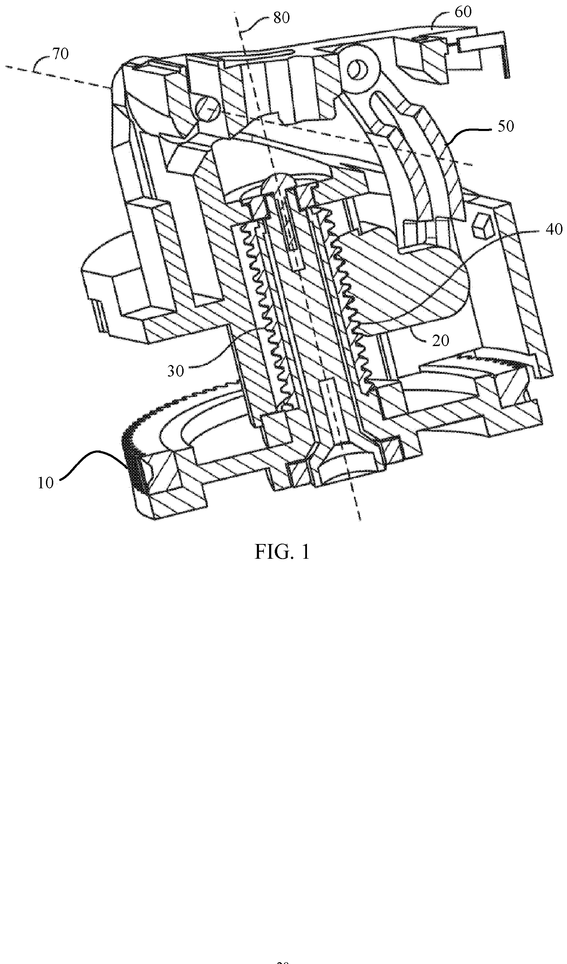

During the video conference, the used terminal device is usually a camera. The camera is configured to capture a video conference scene of one location, and transmit the video conference scene to another location through the network, so that attendees talk face to face. However, a viewing angle range of a lens of the camera is usually not greater than 80 degrees. To cover a larger range of video conference scene, a camera pan-tilt-zoom control needs to be disposed. The camera pan-tilt-zoom control is used as a support device for the camera, and can drive the camera to be adjusted in a relatively large angle range. Referring to a sectional view of a camera pan-tilt-zoom control shown in FIG. 1, the current and universal camera pan-tilt-zoom control includes: a gear 10, a lifting nut 20, a first screw thread 30, a second screw thread 40 provided on the lifting nut 20, a vertical swing arm 50, and a bracket 60. The first screw thread 30 is engaged with the second screw thread 40. In addition, a dashed line 70 indicates a horizontal axis, and a dashed line 80 indicates a vertical axis. During the adjustment, the gear 10 is driven by a motor to rotate, the first screw thread 30 and the second screw thread 40 on the gear 10 rotate in cooperation with each other, and the lifting nut 20 pivots upward or downward to drive the vertical swing arm 50 and the bracket 60, so that a camera mounted on the bracket 60 rotates in a vertical direction along the horizontal axis, and an angle of the camera is adjusted.

However, in a research process of this application, it is found that: the foregoing camera pan-tilt-zoom control adjusts the angle of the camera in a screw drive manner, the angle of the camera sometimes needs to be reversely adjusted, and in this case, to quickly adjust the angle of the camera, a user sometimes manually pulls the camera pan-tilt-zoom control reversely, which may damage components, and leads to poor robustness. For example, if the camera pan-tilt-zoom control enables the camera to rotate upward, but the camera needs to rotate downward due to a requirement of the video conference, the user often manually pulls the vertical swing arm 50 or the bracket 60 downward, which may damage the vertical swing arm 50 or the bracket 60.

### SUMMARY

This application provides a camera pan-tilt-zoom control and a camera system as defined by the independent claims, to resolve a prior-art problem of poor robustness of a camera pan-tilt-zoom control.

The present invention provides a camera pan-tilt-zoom control according to claim 1.

According to a first aspect, this application provides a camera pan-tilt-zoom control, including:
a pan-tilt-zoom bracket, a first drive system, a camera mounting bracket, and a first motor, where
the first drive system includes a first gear and a second gear engaged with each other;
the first motor is connected to the first gear, and is configured to drive the first gear to rotate;
the camera mounting bracket is connected to the second gear, and is securely connected to the pan-tilt-zoom bracket by using a bearing, and the camera mounting bracket is configured to support a camera; and
a first gear shaft of the first gear, a second gear shaft of the second gear, and an axle center of the bearing are parallel to each other.

The first drive system is a gear drive system, so that when a user manually pulls the first drive system or the camera mounting bracket reversely to adjust an angle of the camera in a vertical direction, components in the camera pan-tilt-zoom control are not easily damaged. Therefore, compared with a camera pan-tilt-zoom control in the prior art, the camera pan-tilt-zoom control disclosed in this embodiment of this application can reduce damage by a reverse force to the camera pan-tilt-zoom control, and improve robustness of the camera pan-tilt-zoom control.

With reference to the first aspect, in a first possible implementation of the first aspect, the first gear is a full gear; and
the second gear is a sector gear.

During a video conference, the camera pan-tilt-zoom control is vertically placed, and the first gear shaft of the full gear and the second gear shaft of the sector gear are parallel to a horizontal line. When driven by the first motor to rotate in the vertical direction, the full gear drives the sector gear to rotate in the vertical direction, so that the camera mounting bracket rotates in the vertical direction. In addition, the sector gear can reciprocally rotate, so that the camera can be adjusted at a plurality of vertical angles during the video conference.

With reference to the first possible implementation of the first aspect, in a second possible implementation of the first aspect, the sector gear is an external gear, and the full gear is externally engaged with the sector gear.

Through the external engagement, the second gear (namely, the sector gear) can have a relatively large amplitude of swing, so that the camera mounting bracket can rotate with a relatively large amplitude, and further, the camera can have a wide viewing angle range.

With reference to the first possible implementation of the first aspect, in a third possible implementation of the first aspect, the sector gear is an internal gear, and the full gear is internally engaged with the sector gear.

Through the internal engagement, the first gear and the second gear can be more compact, so that a height of the first gear and the second gear is reduced, thereby reducing space occupied by the camera pan-tilt-zoom control disclosed in this embodiment of this application.

With reference to the first aspect, in a fourth possible implementation of the first aspect, the camera mounting bracket and the second gear are of an integrated structure.

Because the camera mounting bracket and the second gear are of an integrated structure, the camera mounting bracket and the second gear are easy to assemble.

With reference to the first aspect, in a fifth possible implementation of the first aspect, the camera mounting bracket is connected to the second gear by using a rivet; or
the camera mounting bracket is connected to the second gear by using a connection gear.

In this case, the camera mounting bracket and the second gear can be detached from each other, and if a fault occurs on the camera mounting bracket, it is convenient to replace the camera mounting bracket having a fault for the camera pan-tilt-zoom control disclosed in this embodiment of this application.

With reference to the first aspect, in a sixth possible implementation of the first aspect,
the first gear is fastened on the pan-tilt-zoom bracket by using the first gear shaft; or
the first gear is fastened on the first motor by using the first gear shaft.

The first gear is fastened on the pan-tilt-zoom bracket or the first motor by using the first gear shaft, so that stability of the camera pan-tilt-zoom control disclosed in this embodiment of this application can be improved.

According to the present invention, the camera pan-tilt-zoom control further includes:
a second drive system and a second motor, where
the second motor is connected to the second drive system, and is configured to drive the second drive system to rotate; and
the second drive system is connected to the pan-tilt-zoom bracket, and is driven by the second motor to drive the pan-tilt-zoom bracket to rotate, where a driving direction of the second drive system is perpendicular to a driving direction of the first drive system.

During the video conference, the first drive system rotates in the vertical direction, to adjust a vertical angle of the camera. The driving direction of the second drive system is perpendicular to the driving direction of the first drive system, and therefore, the driving direction of the second drive system is a horizontal direction, so that an angle of the camera in the horizontal direction can be adjusted.

According to a further exemplary embodiment which is not part of the present invention,
the second drive system includes a third gear and a fourth gear engaged with each other, where
the third gear is securely connected to the second motor, and is driven by the second motor to rotate; and
the fourth gear is connected to the pan-tilt-zoom bracket, and is configured to drive the pan-tilt-zoom bracket to rotate.

According to the present invention, the second drive system includes:
a pan-tilt-zoom pulley system, where the pan-tilt-zoom pulley system includes a driving gear and a driven gear, where
the driving gear is connected to the second motor by using a driving pulley shaft, and is driven by the second motor to rotate; and the driven gear is connected to the pan-tilt-zoom bracket, and is configured to drive the pan-tilt-zoom bracket to rotate.

In this embodiment of this application, the second drive system is a gear drive system or a pulley drive system. When the user manually adjusts the second drive system or the pan-tilt-zoom bracket to adjust the angle of the camera in the horizontal direction, the components in the camera pan-tilt-zoom control are also not easy to damage, thereby further improving the robustness of the camera pan-tilt-zoom control.

According to a second aspect, this application provides a camera system, including:
the camera pan-tilt-zoom control according to the first aspect; and
a camera, where
the camera is mounted on a camera mounting bracket of the camera pan-tilt-zoom control.

The camera system disclosed in this embodiment of this application can adjust an angle of the camera in a vertical direction by using the first drive system. In addition, when a user manually pulls the first drive system or the camera mounting bracket reversely to adjust the angle of the camera in the vertical direction, components in the camera pan-tilt-zoom control are not easily damaged. Therefore, the camera system disclosed in this embodiment of this application can reduce damage by a reverse force to the camera pan-tilt-zoom control, and improve robustness of the camera pan-tilt-zoom control.

In addition, an angle of the camera in a horizontal direction can be adjusted by using the second drive system. The second drive system is a gear drive system or a pulley drive system. If the user manually adjusts the second drive system or the pan-tilt-zoom bracket to adjust the angle of the camera in the horizontal direction, the components in the camera pan-tilt-zoom control are also not easy to damage, thereby further improving the robustness of the camera pan-tilt-zoom control.

Embodiments of this application disclose the camera pan-tilt-zoom control and the camera system. In the camera pan-tilt-zoom control, the camera mounting bracket is driven by the first drive system to rotate, to adjust an angle of the camera. In other words, the camera pan-tilt-zoom control adjusts the angle of the camera by using the first drive system, and the first drive system is a gear drive system, so that when the user manually pulls the first drive system or the camera mounting bracket reversely to adjust the angle of the camera in the vertical direction, the components in the camera pan-tilt-zoom control are not easily damaged. Therefore, compared with a camera pan-tilt-zoom control in the prior art, the camera pan-tilt-zoom control disclosed in the embodiments of this application can reduce damage by a reverse force to the camera pan-tilt-zoom control, and improve robustness of the camera pan-tilt-zoom control.

### BRIEF DESCRIPTION OF DRAWINGS

FIG. 1 is a schematic structural diagram of a camera pan-tilt-zoom control disclosed in the prior art;
FIG. 2 is a schematic structural diagram of a camera pan-tilt-zoom control according to a first embodiment of this application;
FIG. 3 is a sectional view of a camera pan-tilt-zoom control disclosed according to the first embodiment of this application;
FIG. 4 is a sectional view of another camera pan-tilt-zoom control according to the first embodiment of this application;
FIG. 5 is a schematic three-dimensional diagram of a camera pan-tilt-zoom control according to a second embodiment of this application;
FIG. 6 is a schematic three-dimensional diagram of another camera pan-tilt-zoom control according to the second embodiment of this application; and
FIG. 7 is a side view of a camera pan-tilt-zoom control according to the second embodiment of this application.

### DESCRIPTION OF EMBODIMENTS

The following describes embodiments of this application with reference to accompanying drawings.

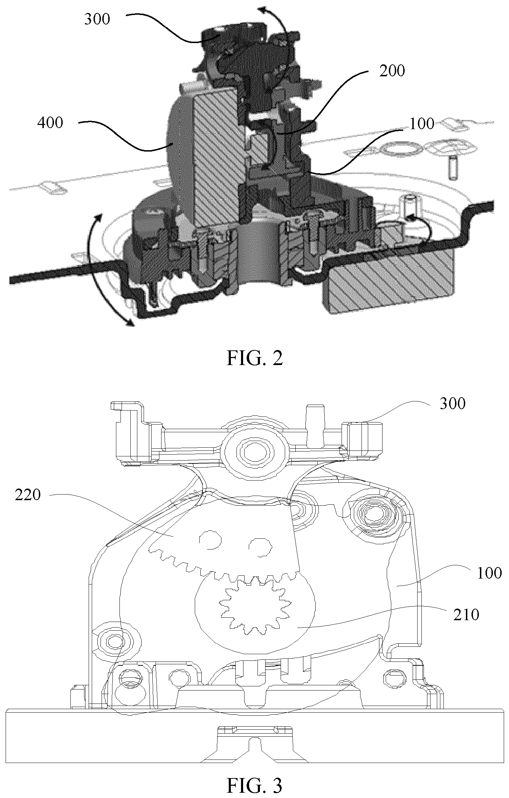

A first embodiment of this application discloses a camera pan-tilt-zoom control. Referring to a schematic structural diagram shown in FIG. 2, the camera pan-tilt-zoom control includes a pan-tilt-zoom bracket 100, a first drive system 200, a camera mounting bracket 300, and a first motor 400.

The first drive system 200 includes a first gear and a second gear engaged with each other. That is, the first drive system 200 is a gear drive system.

The first motor 400 is connected to the first gear, and is configured to drive the first gear to rotate. Because the first gear and the second gear are engaged with each other, when the first gear is driven by the first motor 400 to rotate, the second gear also rotates with the first gear.

The camera mounting bracket 300 is connected to the second gear, and is securely connected to the pan-tilt-zoom bracket 100 by using a bearing, and the camera mounting bracket is configured to support a camera. Before a video conference, the camera is fastened on the camera mounting bracket 300, so that the camera mounting bracket 300 securely supports the camera. In addition, the second gear is connected to the camera mounting bracket 300. When rotating, the second gear can drive the camera mounting bracket 300 to rotate.

A first gear shaft of the first gear, a second gear shaft of the second gear, and an axle center of the bearing are parallel to each other. Therefore, a direction of rotation of the first drive system 200 is the same as a direction of rotation of the camera mounting bracket 300.

If the camera pan-tilt-zoom control disclosed in this embodiment of this application is configured to adjust a vertical angle of the camera, the camera pan-tilt-zoom control is vertically placed during the video conference. In this case, the first gear shaft of the first gear, the second gear shaft of the second gear, and the axle center of the bearing are parallel to a horizontal line, and the direction of rotation of first drive system is vertical. Because the direction of rotation of the first drive system 200 is the same as the direction of rotation of the camera mounting bracket 300, when driven by the second gear, the camera mounting bracket also rotates in the vertical direction, thereby adjusting the vertical angle of the camera.

In the camera pan-tilt-zoom control disclosed in this embodiment of this application, the camera mounting bracket is driven by the first drive system to rotate, to adjust an angle of the camera. In addition, in other words, the camera pan-tilt-zoom control adjusts the angle of the camera by using the first drive system, and the first drive system is a gear drive system, so that when a user manually pulls the first drive system or the camera mounting bracket reversely to adjust the angle of the camera in the vertical direction, components in the camera pan-tilt-zoom control are not easily damaged. Therefore, compared with a camera pan-tilt-zoom control in the prior art, the camera pan-tilt-zoom control disclosed in this embodiment of this application can reduce damage by a reverse force to the camera pan-tilt-zoom control, and improve robustness of the camera pan-tilt-zoom control.

In the camera pan-tilt-zoom control disclosed in this embodiment of this application, the first drive system includes the first gear and the second gear engaged with each other. For example, the first gear is a full gear, and the second gear is a sector gear. During the video conference, the camera pan-tilt-zoom control is vertically placed, and the first gear shaft of the full gear and the second gear shaft of the sector gear are parallel to the horizontal line. When driven by the first motor to rotate in the vertical direction, the full gear drives the sector gear to rotate in the vertical direction, so that the camera mounting bracket rotates in the vertical direction. In addition, the sector gear can reciprocally rotate, so that the camera can be adjusted at a plurality of vertical angles during the video conference.

The full gear may be engaged with the sector gear in a plurality of manners. In one manner, referring to a sectional view of a camera pan-tilt-zoom control shown in FIG. 3, the camera pan-tilt-zoom control shown in the figure includes a pan-tilt-zoom bracket 100, a camera mounting bracket 300, a first gear 210, and a second gear 220. The first gear 210 and the second gear 220 form a first drive system together.

The first gear 210 is connected to a first motor, and is driven by the first motor to rotate. The second gear 220 is connected to the camera mounting bracket 300. When an angle of a camera needs to be adjusted, the first motor drives the first gear 210 to rotate. In this case, the second gear 220 engaged with the first gear 210 rotates with the first gear 210, and drives the camera mounting bracket 300 connected to the second gear 220 to rotate. In addition, in the camera pan-tilt-zoom control shown in the figure, the second gear 220 (namely, a sector gear) is an external gear. A full gear used as the first gear 210 is externally engaged with the sector gear. Through the external engagement, the second gear 220 (namely, the sector gear) can have a relatively large amplitude of swing, so that the camera mounting bracket can rotate with a relatively large amplitude, and further, the camera can have a wide viewing angle range.

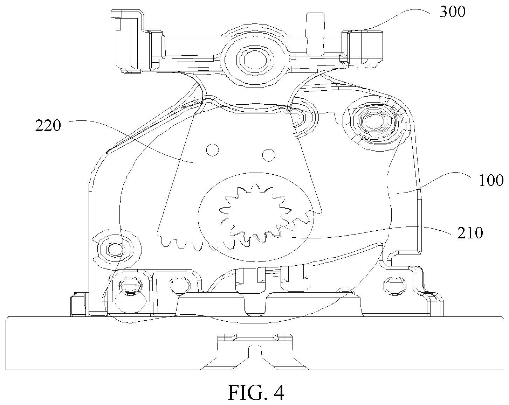

In another manner, referring to a sectional view of a camera pan-tilt-zoom control shown in FIG. 4, the camera pan-tilt-zoom control shown in the figure includes a pan-tilt-zoom bracket 100, a camera mounting bracket 300, a first gear 210, and a second gear 220. The first gear 210 and the second gear 220 form a first drive system together.

The first gear 210 is connected to the first motor, and is driven by the first motor to rotate. The second gear 220 is connected to the camera mounting bracket 300. When an angle of a camera needs to be adjusted, the first motor drives the first gear 210 to rotate. In this case, the second gear 220 engaged with the first gear 210 rotates with the first gear 210, and drives the camera mounting bracket 300 to rotate. In addition, in the camera pan-tilt-zoom control shown in the figure, the second gear 220 (namely, a sector gear) is an internal gear. A full gear used as the first gear 210 is internally engaged with the sector gear. Through the internal engagement, the first gear and the second gear can be more compact, so that heights of the first gear and the second gear are reduced, and space occupied by the camera pan-tilt-zoom control disclosed in this embodiment of this application is reduced.

Further, in the camera pan-tilt-zoom control disclosed in this embodiment of this application, the camera mounting bracket is connected to the second gear, so that when rotating, the second gear can drive the camera mounting bracket to rotate. The camera mounting bracket may be connected to the second gear in a plurality of manners.

In one manner, the camera mounting bracket is connected to the second gear by using a rivet; or in another manner, the camera mounting bracket is connected to the second gear by using a connection gear. In this case, the camera mounting bracket and the second gear can be detached from each other, and if a fault occurs on the camera mounting bracket, it is convenient to replace the camera mounting bracket having a fault for the camera pan-tilt-zoom control disclosed in this embodiment of this application.

Optionally, the camera mounting bracket and the second gear may further be of an integrated structure. Because the camera mounting bracket and the second gear are of an integrated structure, the camera mounting bracket and the second gear are easy to assemble.

Certainly, the camera mounting bracket may be further connected to the second gear in other manners. This is not limited in this embodiment of this application.

Further, in this embodiment of this application, the first gear is fastened on the pan-tilt-zoom bracket by using the first gear shaft. In this case, the first gear shaft of the first gear may be fastened on the pan-tilt-zoom bracket through welding or the like. In addition, the first motor may be fastened on the pan-tilt-zoom bracket, or fastened on a base on which the camera pan-tilt-zoom control is placed.

Alternatively, the first gear is fastened on the first motor by using the first gear shaft. In this case, the first motor may be fastened on the pan-tilt-zoom bracket, and then the first gear shaft is fastened on the pan-tilt-zoom bracket through welding or the like.

The first gear is fastened on the pan-tilt-zoom bracket or the first motor by using the first gear shaft, so that stability of the camera pan-tilt-zoom control disclosed in this embodiment of this application can be improved.

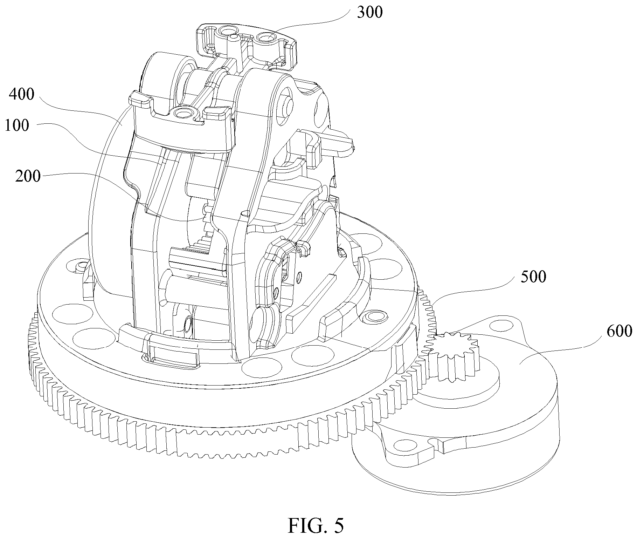

With use of the pan-tilt-zoom bracket, the first drive system, the camera mounting bracket, and the first motor, the camera can be adjusted at a vertical angle. During an actual video conference, usually, the camera also needs to be adjusted in a horizontal direction. To satisfy this requirement, a second embodiment of this application discloses a camera pan-tilt-zoom control. The camera pan-tilt-zoom control includes a pan-tilt-zoom bracket, a first drive system, a camera mounting bracket, and a first motor. In addition, referring to a schematic three-dimensional diagram shown in FIG. 5, the camera pan-tilt-zoom control includes a pan-tilt-zoom bracket 100, a first drive system 200, a camera mounting bracket 300, and a first motor 400, and further includes a second drive system 500 and a second motor 600.

The second motor 600 is connected to the second drive system 500, and is configured to drive the second drive system 500 to rotate. In addition, the second motor 600 is usually fastened on a base on which the camera pan-tilt-zoom control is placed.

The second drive system 500 is connected to the pan-tilt-zoom bracket 100, and is driven by the second motor 600 to drive the pan-tilt-zoom bracket 100 to rotate. A driving direction of the second drive system 500 is perpendicular to a driving direction of the first drive system.

During the video conference, the first drive system rotates in a vertical direction, to adjust a vertical angle of the camera. The driving direction of the second drive system 500 is perpendicular to the driving direction of the first drive system, and therefore, the driving direction of the second drive system 500 is a horizontal direction, so that an angle of the camera in the horizontal direction can be adjusted.

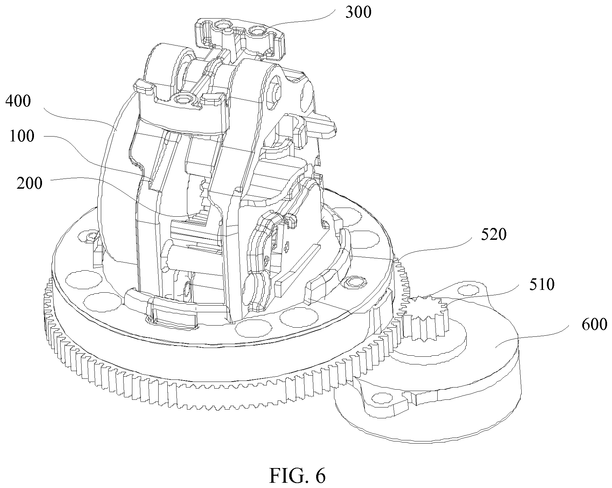

In this embodiment of this application, the second drive system may be implemented in a plurality of manners. In one manner, referring to FIG. 6, the second drive system includes a third gear 510 and a fourth gear 520 engaged with each other.

The third gear 510 is securely connected to the second motor 600, and is driven by the second motor 600 to rotate. In addition, because the third gear 510 and the fourth gear 520 are engaged with each other, during rotation, the third gear 510 drives the fourth gear 520 to rotate.

The fourth gear 520 is connected to the pan-tilt-zoom bracket, and is configured to drive the pan-tilt-zoom bracket to rotate. In this case, during rotation, the fourth gear 520 correspondingly drives the pan-tilt-zoom bracket 100 to rotate.

During the video conference, a third gear shaft of the third gear 510 and a fourth gear shaft of the fourth gear 520 are perpendicular to a horizontal plane, and, the fourth gear 520 is usually fastened below the pan-tilt-zoom bracket 100 and the third gear 510 is disposed above the second motor 600. When the angle of the camera in the horizontal direction needs to be adjusted, the second motor 600 drives the third gear 510 to rotate in the horizontal direction, the third gear 510 drives the fourth gear 520 to correspondingly rotate in the horizontal direction, and the pan-tilt-zoom bracket fastened on the fourth gear 520 rotates with the fourth gear 520 in the horizontal direction, thereby adjusting the angle of the camera in the horizontal direction.

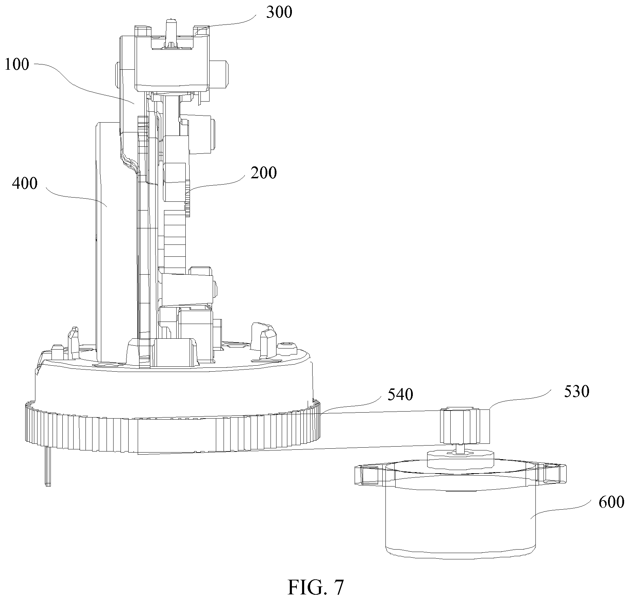

Alternatively, in another manner, referring to FIG. 7, the camera pan-tilt-zoom control includes: a pan-tilt-zoom bracket 100, a first drive system 200, a camera mounting bracket 300, and a first motor 400, and further includes a second drive system and a second motor 600. The second drive system includes a pan-tilt-zoom pulley system. The pan-tilt-zoom pulley system includes a driving gear 530 and a driven gear 540. The driving gear 530 is connected to the second motor 600 by using a driving pulley shaft, and is driven by the second motor to rotate. The driven gear 540 is connected to the pan-tilt-zoom bracket, and is configured to drive the pan-tilt-zoom bracket to rotate.

During the video conference, the driving pulley shaft of the driving gear 530 is perpendicular to a horizontal plane. In addition, the driving gear 530 is usually fastened above the second motor 600, and the driven gear 540 is disposed below the pan-tilt-zoom bracket 100. When the angle of the camera in the horizontal direction needs to be adjusted, the second motor 600 drives the driving gear 530 to rotate in the horizontal direction, and the driving gear 530 drives the driven gear 540 to correspondingly rotate in the horizontal direction, and further drives the pan-tilt-zoom bracket 100 to rotate with the driven gear 540 in the horizontal direction, thereby adjusting the angle of the camera in the horizontal direction.

In this embodiment of this application, the second drive system is a gear drive system or a pulley drive system. When the user manually adjusts the second drive system or the pan-tilt-zoom bracket to adjust the angle of the camera in the horizontal direction, the components in the camera pan-tilt-zoom control are also not easy to damage, thereby further improving the robustness of the camera pan-tilt-zoom control.

In another embodiment of this application, a camera system is further disclosed. The camera system includes the camera pan-tilt-zoom control described in the foregoing embodiments and a camera. The camera is mounted on a camera mounting bracket of the camera pan-tilt-zoom control.

If a video conference is needed, the camera system is placed on a base. When an angle of the camera in a vertical direction needs to be adjusted, a first motor drives a first drive system, and then the first drive system drives the camera mounting bracket, so that the camera mounted on the camera mounting bracket rotates in the vertical direction.

In addition, by using the camera system disclosed in this embodiment of this application, when a user manually pulls the first drive system or the camera mounting bracket reversely to adjust the angle of the camera in the vertical direction, components in the camera pan-tilt-zoom control are not easily damaged. Therefore, the camera system disclosed in this embodiment of this application can reduce damage by a reverse force to the camera pan-tilt-zoom control, and improve robustness of the camera pan-tilt-zoom control.

Further, when an angle of the camera in a horizontal direction needs to be adjusted, a second motor drives a second drive system, and then the second drive system drives the pan-tilt-zoom bracket, so that the pan-tilt-zoom bracket rotates in the horizontal direction, thereby adjusting the angle of the camera in the horizontal direction.

With the first drive system and the second drive system, the angles of the camera in the vertical direction and the horizontal direction can be respectively adjusted, thereby satisfying a requirement of the video conference.

In addition, the second drive system is a gear drive system or a pulley drive system. When the user manually adjusts the second drive system or the pan-tilt-zoom bracket to adjust the angle of the camera in the horizontal direction, the components in the camera pan-tilt-zoom control are also not easy to damage, thereby further improving the robustness of the camera pan-tilt-zoom control.

A person skilled in the art may clearly understand that, the technologies in the embodiments of this application may be implemented by software in addition to a necessary general hardware platform. Based on such an understanding, the technical solutions in the embodiments of this application essentially or the part contributing to the prior art may be implemented in a form of a software product. The software product may be stored in a storage medium, such as a ROM/RAM, a magnetic disk, or a compact disc, and includes several instructions for instructing a computer device (which may be a personal computer, a server, a network device, or the like) to perform the methods described in the embodiments or some parts of the embodiments of this application.

The invention is defined in the appended claims.

## Claims

1. A camera pan-tilt-zoom control, comprising:
a pan-tilt-zoom bracket (100), a first drive system (200), a camera mounting bracket (300), and a first motor (400), wherein
the first drive system comprises a first gear (210) and a second gear (220) engaged with each other;
the first motor is connected to the first gear, and is configured to drive the first gear to rotate;
the camera mounting bracket is connected to the second gear, and is securely connected to the pan-tilt-zoom bracket by using a bearing, and the camera mounting bracket is configured to support a camera; and
a first gear shaft of the first gear, a second gear shaft of the second gear, and an axle center of the bearing are parallel to each other, wherein
the first gear is a full gear; and
the second gear is a sector gear;
wherein the camera pan-tilt-zoom control further comprises:
a second drive system and a second motor (600), wherein
the second motor is connected to the second drive system, and is configured to drive the second drive system to rotate; and
the second drive system is connected to the pan-tilt-zoom bracket, and is driven by the second motor to drive the pan-tilt-zoom bracket to rotate, wherein a driving direction of the second drive system is perpendicular to a driving direction of the first drive system; wherein
the second drive system comprises:
a pan-tilt-zoom pulley system, wherein the pan-tilt-zoom pulley system comprises a driving gear (530) and a driven gear (540), wherein
the driving gear is connected to the second motor by using a driving pulley shaft, and is driven by the second motor to rotate; and
the driven gear is connected to the pan-tilt-zoom bracket, and is configured to drive the pan-tilt-zoom bracket to rotate.

2. The camera pan-tilt-zoom control according to claim 1, wherein
the sector gear is an external gear, and the full gear is externally engaged with the sector gear.

3. The camera pan-tilt-zoom control according to claim 1, wherein
the sector gear is an internal gear, and the full gear is internally engaged with the sector gear.

4. The camera pan-tilt-zoom control according to any one of claims 1 to 3, wherein
the camera mounting bracket and the second gear are of an integrated structure.

5. The camera pan-tilt-zoom control according to any one of claims 1 to 3, wherein
the camera mounting bracket is connected to the second gear by using a rivet; or
the camera mounting bracket is connected to the second gear by using a connection gear.

6. The camera pan-tilt-zoom control according to any one of claims 1 to 5, wherein the first gear is fastened on the pan-tilt-zoom bracket by using the first gear shaft; or the first gear is fastened on the first motor by using the first gear shaft.

7. A camera system, comprising:
the camera pan-tilt-zoom control according to any one of claims 1 to 6; and
a camera, wherein
the camera is mounted on a camera mounting bracket of the camera pan-tilt-zoom control.

## Patentansprüche

1. Kamera-Schwenk-Neige-Zoom-Steuerung, die Folgendes umfasst:
eine Schwenk-Neige-Zoom-Halterung (100), ein erstes Antriebssystem (200), eine Kamerabefestigungshalterung (300) und einen ersten Motor (400), wobei
das erste Antriebssystem ein erstes Zahnrad (210) und ein zweites Zahnrad (220) umfasst, die miteinander in Eingriff stehen;
der erste Motor mit dem ersten Zahnrad verbunden ist und konfiguriert ist, um das erste Zahnrad anzutreiben, um sich zu drehen;
die Kamerabefestigungshalterung mit dem zweiten Zahnrad verbunden ist und mit der Schwenk-Neige-Zoom-Halterung durch Verwenden eines Lagers fest verbunden ist, und die Kamerabefestigungshalterung konfiguriert ist, um eine Kamera zu tragen; und
eine erste Zahnradwelle des ersten Zahnrads, eine zweite Zahnradwelle des zweiten Zahnrads und eine Achsmitte des Lagers parallel zueinander sind, wobei
das erste Zahnrad ein volles Zahnrad ist; und
das zweite Zahnrad ein Zahnbogen ist;
wobei die Kamera-Schwenk-Neige-Zoom-Steuerung ferner Folgendes umfasst:
ein zweites Antriebssystem und einen zweiten Motor (600), wobei
der zweite Motor mit dem zweiten Antriebssystem verbunden ist und konfiguriert ist, um das zweite Antriebssystem anzutreiben, um sich zu drehen; und
das zweite Antriebssystem mit der Schwenk-Neige-Zoom-Halterung verbunden ist und durch den zweiten Motor angetrieben wird, um die Schwenk-Neige-Zoom-Halterung anzutreiben, um sich zu drehen, wobei eine Antriebsrichtung des zweiten Antriebssystems senkrecht zu einer Antriebsrichtung des ersten Antriebssystems ist; wobei
das zweite Antriebssystem Folgendes umfasst:
ein Schwenk-Neige-Zoom-Riemenscheibensystem, wobei das Schwenk-Neige-Zoom-Riebenscheibensystem ein Antriebszahnrad (530) und ein angetriebenes Zahnrad (540) umfasst, wobei
das Antriebszahnrad mit dem zweiten Motor durch Verwenden einer Antriebsriebenscheibenwelle verbunden ist und durch den zweiten Motor angetrieben wird, um sich zu drehen; und
das angetriebene Zahnrad mit der Schwenk-Neige-Zoom-Halterung verbunden ist und konfiguriert ist, um die Schwenk-Neige-Zoom-Halterung anzutreiben, um sich zu drehen.

2. Kamera-Schwenk-Neige-Zoom-Steuerung nach Anspruch 1, wobei
der Zahnbogen ein Außenzahnrad ist und das volle Zahnrad mit dem Zahnbogen äußerlich in Eingriff steht.

3. Kamera Schwenk-Neige-Zoom-Steuerung nach Anspruch 1, wobei
der Zahnbogen ein Innenzahnrad ist und das volle Zahnrad mit dem Zahnbogen innerlich in Eingriff steht.

4. Kamera-Schwenk-Neige-Zoom-Steuerung nach einem der Ansprüche 1 bis 3, wobei
die Kamerabefestigungshalterung und das zweite Zahnrad eine integrierte Struktur aufweisen.

5. Kamera-Schwenk-Neige-Zoom-Steuerung nach einem der Ansprüche 1 bis 3, wobei
die Kamerabefestigungshalterung mit dem zweiten Zahnrad durch Verwenden einer Niete verbunden ist; oder
die Kamerabefestigungshalterung mit dem zweiten Zahnrad durch Verwenden eines Verbindungszahnrads verbunden ist.

6. Kamera-Schwenk-Neige-Zoom-Steuerung nach einem der Ansprüche 1 bis 5, wobei
das erste Zahnrad an der Schwenk-Neige-Zoom-Halterung durch Verwenden der ersten Zahnradwelle festgemacht ist; oder
das erste Zahnrad an dem ersten Motor durch Verwenden der ersten Zahnradwelle festgemacht ist.

7. Kamerasystem, das Folgendes umfasst:
die Kamera-Schwenk-Neige-Zoom-Steuerung nach einem der Ansprüche 1 bis 6; und
eine Kamera, wobei
die Kamera an einer Kamerabefestigungshalterung der Kamera-Schwenk-Neige-Zoom-Steuerung befestigt ist.

## Revendications

1. Commande de panoramique-inclinaison-variation de focale de caméra, comprenant :
un support de panoramique-inclinaison-variation de focale (100), un premier système d'entraînement (200), un support de montage de caméra (300) et un premier moteur (400),
le premier système d'entraînement comprenant un premier engrenage (210) et un second engrenage (220) en prise l'un avec l'autre ;
le premier moteur étant relié au premier engrenage, et étant conçu pour entraîner le premier engrenage en rotation ;
le support de montage de caméra étant relié au second engrenage, et étant solidement relié au support de panoramique-inclinaison-variation de focale à l'aide d'un support, et le support de montage de caméra étant conçu pour supporter une caméra ; et
un premier arbre d'engrenage du premier engrenage, un second arbre d'engrenage du second engrenage et un centre d'essieu du support étant parallèles l'un à l'autre,
le premier engrenage étant un engrenage complet ; et
le second engrenage étant un secteur denté ;
la commande de panoramique-inclinaison-variation de focale de la caméra comprenant en outre :
un second système d'entraînement et un second moteur (600),
le second moteur étant relié au second système d'entraînement, et étant conçu pour entraîner le second système d'entraînement en rotation ; et
le second système d'entraînement étant relié au support de panoramique-inclinaison-variation de focale, et étant entraîné par le second moteur pour entraîner le support de panoramique-inclinaison-variation de focale en rotation, une direction d'entraînement du second système d'entraînement étant perpendiculaire à une direction d'entraînement du premier système d'entraînement ;
le second système d'entraînement comprenant :
un système de poulie de panoramique-inclinaison-variation de focale, le système de poulie de panoramique-inclinaison-variation de focale comprenant un engrenage entraînant (530) et un engrenage entraîné (540),
l'engrenage entraînant étant relié au second moteur à l'aide d'un arbre de poulie d'entraînement, et étant entraîné par le second moteur en rotation ; et
l'engrenage entraîné étant relié au support de panoramique-inclinaison-variation de focale, et étant conçu pour entraîner le support de panoramique-inclinaison-variation de focale en rotation.

2. Commande de panoramique-inclinaison-variation de focale de caméra selon la revendication 1,
le secteur denté étant un engrenage externe, et l'engrenage complet étant en prise de l'extérieur avec le secteur denté.

3. Commande de panoramique-inclinaison-variation de focale de caméra selon la revendication 1,
le secteur denté étant un engrenage interne, et l'engrenage complet étant en prise en interne avec le secteur denté.

4. Commande de panoramique-inclinaison-variation de focale de caméra selon l'une quelconque des revendications 1 à 3, le support de montage de caméra et le second engrenage étant d'une structure intégrée.

5. Commande de panoramique-inclinaison-variation de focale de caméra selon l'une quelconque des revendications 1 à 3, le support de montage de caméra étant relié au second engrenage à l'aide d'un rivet ; ou le support de montage de caméra étant relié au second engrenage à l'aide d'un engrenage de liaison.

6. Commande de panoramique-inclinaison-variation de focale de caméra selon l'une quelconque des revendications 1 à 5, le premier engrenage étant fixé sur le support de panoramique-inclinaison-variation de focale à l'aide du premier arbre d'engrenage ; ou le premier engrenage étant fixé sur le premier moteur à l'aide du premier arbre d'engrenage.

7. Système de caméra, comprenant :
la commande de panoramique-inclinaison-variation de focale de caméra selon l'une quelconque des revendications 1 à 6 ; et
une caméra
la caméra étant montée sur un support de montage de caméra de la commande de panoramique-inclinaison-variation de focale de la caméra.
